Europäisches Patentamt

European Patent Office

Office européen des brevets

(19)

(11) Veröffentlichungsnummer: **0 071 137**
A2

(12) **EUROPÄISCHE PATENTANMELDUNG**

(21) Anmeldenummer: 82106474.8

(22) Anmeldetag: 19.07.82

(51) Int. Cl.³: **B 01 J 29/38**
B 01 J 21/20, B 01 J 23/92
B 01 J 27/28, C 10 G 3/00

(30) Priorität: 30.07.81 DE 3130065

(43) Veröffentlichungstag der Anmeldung:
09.02.83 Patentblatt 83/6

(84) Benannte Vertragsstaaten:
BE DE FR IT SE

(71) Anmelder: BAYER AG
Zentralbereich Patente, Marken und Lizenzen
D-5090 Leverkusen 1, Bayerwerk(DE)

(72) Erfinder: Weisser, Jürgen, Dr.
Suedstrasse 15
D-4047 Dormagen 11(DE)

(72) Erfinder: Scharfe, Gerhard, Dr.
Berta-von-Suttner-Strasse 69
D-5090 Leverkusen 1(DE)

(72) Erfinder: Grolig, Johann, Dr.
Heinrich-Luebke-Strasse 22
D-5090 Leverkusen 1(DE)

(72) Erfinder: Waldmann, Helmut, Dr.
Henry-T.-von Boettinger-Strasse 15
D-5090 Leverkusen 1(DE)

(54) Verfahren zur Regeneration von Katalysatoren.

(57) Katalysatoren, die mehr als 50 Gew.-% an Sauerstoff gebundenes Silicium, sowie gegebenenfalls, an Sauerstoff gebunden oder in Ionenform vorliegend, eines oder mehreren der Elemente der 1. bis 4. Hauptgruppe des Periodensystems, der Elemente der 3. bis 6. Nebengruppe des Periodensystems und/oder der Elemente Phosphor, Arsen, Antimon und/oder Zink enthalten, werden bei Temperaturen im Bereich von 300 bis 450°C mit einem Gasgemisch regeneriert, das molekularen Sauerstoff und Wasserdampf enthält.

EP 0 071 137 A2

**0071137**

BAYER AKTIENGESELLSCHAFT      5090 Leverkusen, Bayerwerk

Zentralbereich
Patente, Marken und Lizenzen   Gai/bc/c

Verfahren zur Regeneration von Katalysatoren

Die vorliegende Erfindung betrifft ein Verfahren zur Regeneration von überwiegend oder vollständig aus Kieselsäure bestehenden Katalysatoren.

Bei einer Vielzahl von technischen Prozessen zur Umwandlung organisch-chemischer Rohstoffe werden Katalysatoren verwendet, die überwiegend oder vollständig aus Kieselsäure bestehen. Solche Katalysatoren sind beispielsweise amorphes Siliciumdioxid und dessen Gemische mit Oxiden anderer Elemente, beispielsweise Aluminium, amorphe Silikate, kristalline Silikate, kristallines Siliciumdioxid in verschiedenen Kristallmodifikationen und Siliciumdioxid-reiche Molekularsiebe.

Beispielsweise werden für die Umwandlung von Methanol in Kohlenwasserstoffe Katalysatoren verwendet, die als katalytisch aktiven Bestandteil einen Kieselsäure-reichen Zeolith aus der Pentasil-Familie enthalten. Bei dieser Reaktion werden, wie bei praktisch allen Umwandlungsreaktionen organischer

Le A 21 152-Ausland

Stoffe, die bei erhöhter Temperatur ablaufen, neben den gewünschten Stoffen in geringem Ausmaß stets Hochsieder und Koks gebildet, welche die Oberfläche des Katalysators belegen. Bei den Hochsiedern handelt es sich im allgemeinen um kohlenstoffreiche Produkte, die auch als Koksvorläufer bezeichnet werden. Die Belegung der Katalysatoroberflächen mit Koks und/oder Koksvorläufern hat zur Folge, daß die Aktivität der Katalysatoren nach einiger Zeit merklich abnimmt. Dadurch sinkt beispielsweise bei der Umwandlung von Methanol in Kohlenwasserstoffe nach einigen 100 Stunden der Methanolumsatz auf Werte von unter 99 %, und es werden anstelle der gewünschten Kohlenwasserstoffe, deren Raum/Zeit-Ausbeute drastisch abnimmt, größere Mengen Dimethylether gebildet.

Es ist bekannt, daß man kieselsäurereiche Katalysatoren, beispielsweise solche vom Zeolith-Typ, durch Behandlung mit Luft oder Sauerstoff/Stickstoff-Gemischen bei sehr hohen Temperaturen unter Abbrennen der kohlenstoffreichen Beläge wieder regenerieren kann. So wird z.B. in Ind.Eng.Chem. Process Des.Dev., Vol. 17, No. 3, S. 341 (1978) ein Verfahren zur Regeneration von durch Koksbildung geschädigten Katalysatoren beschrieben, bei dem Zeolith-Katalysatoren, die für die Umsetzung von Methanol zu Kohlenwasserstoffen bei Temperaturen von 370 bis 400°C eingesetzt wurden, nach Abfall des Methanol-Umsatzes auf 99 bis 82 %, was einer Laufzeit von durchschnittlich 200 Stunden entsprach, mit Sauerstoff/Stickstoff-Gemischen regeneriert werden. Die Regeneration erfolgt nach einem Stickstoff-Purge bei Reaktionstem-

Le A 21 152

peratur zunächst mit 0,5 Vol.-% $O_2$ in Stickstoff bei 480 bis 540°C und dann, nach Steigerung des $O_2$-Gehaltes auf 20 Vol.-%, durch 4-stündiges Erhitzen auf 600°C.

Nachteilig bei diesem Verfahren ist die Erhöhung der Temperatur um 200°C und mehr von der Reaktions- auf die Regenerationstemperatur, wodurch, insbesondere bei größeren technischen Anlagen, deren Katalysatormenge eine hohe Wärmekapazität besitzt, wertvolle Zeit für das Aufheizen und Abkühlen des Katalysators bei der Regeneration aufgewendet werden muß. Dadurch verringert sich die Zeit, während der der Katalysator für die gewünschte Reaktion zur Verfügung steht.

Weiterhin müssen u.U. Sonderwerkstoffe verwendet werden, um eine Verzunderung der Reaktorwandungen bei den hohen Regenerationstemperaturen zu vermeiden.

Versucht man zur Vermeidung dieser Nachteile eine Regeneration der Katalysatoren mit sauerstoffhaltigen Gasen bei Temperaturen unterhalb von 450°C und besonders im Bereich der für die Umwandlung von Methanol in Kohlenwasserstoffe üblichen Reaktionstemperatur von 300 bis 400°C vorzunehmen, so wird festgestellt, daß die Katalysatoren in diesem Temperaturbereich nicht oder nur in äußerst geringem Ausmaß regeneriert werden.

Weiterhin ist bekannt, daß Katalysatoren auf der Basis von Kieselsäure bei erhöhten Temperaturen in Gegenwart von Wasserdampf irreversible Schädigungen erleiden (s. hierzu beispielsweise Catalysis,

Le A 21 152

Vol. VI, edited by P.H. Emmet, Reinhold Publishing Corp.,
New York, S. 147 (1958). Besonders ausgeprägt ist diese
irreversible Schädigung bei kieselsäurereichen Zeolith-
Katalysatoren, da diese durch Einwirkung von Wasserdampf bei höheren Temperaturen tiefgreifende strukturelle
Veränderungen erfahren, die mit einem ebenfalls irreversiblen Aktivitätsverlust verbunden sind (s. hierzu
beispielsweise I. Wang et al., J. of Catalysis, No. 60,
S. 140-147 (1979).

Es wurde nun ein Verfahren zur Regeneration von mit
Koks und/oder Koksvorläufern belegten Katalysatoren
mit Sauerstoff enthaltenden Gasmischungen gefunden,
das dadurch gekennzeichnet ist, daß man Katalysatoren,
die mehr als 50 Gew.-% an Sauerstoff gebundenes Silicium
(berechnet als $SiO_2$ und ohne Berücksichtigung von Belägen, Bindemitteln und Inertmaterialien), sowie gegebenenfalls, an Sauerstoff gebunden oder in Ionenform vorliegend, eines oder mehrere der Elemente der
1. bis 4. Hauptgruppe des Periodensystems, der Elemente
der 3. bis 6. Nebengruppe des Periodensystems und/oder
der Elemente Phosphor, Arsen, Antimon und/oder Zink
enthalten, bei Temperaturen im Bereich von 300 bis
450°C mit einem Gasgemisch regeneriert, das molekularen Sauerstoff und Wasserdampf enthält.

Nach dem erfindungsgemäßen Verfahren können die verschiedensten Katalysatoren regeneriert werden, die
z.B. aus Siliciumdioxid bestehen oder die Silikate
eines oder mehrere Elemente der vorgenannten Elementgruppen und Elemente mit einem rechnerischen Siliciumdioxid-Anteil von über 50 Gew.-% enthalten. Vorzugsweise
enthalten diese Katalysatoren rechnerisch zwischen

Le A 21 152

70 und 100 Gew.-% Siliciumdioxid, besonders bevorzugt zwischen 75 und 95 Gew.-%. Wenn die zu regenerierenden Katalysatoren Bindemittel und/oder Inertmaterialien enthalten, wie dies bei technisch angewendeten Katalysatoren häufig der Fall ist, so werden diese bei der Ermittlung der obengenannten Prozentangaben nicht berücksichtigt.

Beispielsweise sind zum Einsatz in das erfindungsgemäße Verfahren gebrauchte Katalysatoren geeignet, die Siliciumdioxid, Kieselsäure, amorphe Metall- und/oder Nichtmetallsilikate und/oder kristalline Metall- und/oder Nichtmetallsilikate enthalten, wobei der metallische und/oder nichtmetallische Bestandteil aus einem oder mehreren Elementen der 1. bis 4. Hauptgruppe des Periodensystems, der 3. bis 6. Nebengruppe des Periodensystems und/oder Phosphor, Arsen, Antimon und/oder Zink gebildet wird.

Vorzugsweise werden in das erfindungsgemäße Verfahren gebrauchte Katalysatoren eingesetzt, die kristallines Siliciumdioxid und/oder kristalline Metall- und/oder Nichtmetallsilikate mit Zeolith-Struktur enthalten, wobei die Metall- und/oder Nichtmetallsilikate gegebenenfalls zusätzlich Wasserstoffionen, Alkalimetallionen, Erdalkalimetallionen, Zinkionen, Bleiionen und/oder Seltenerdmetallionen enthalten können.

Besonders bevorzugt werden in das erfindunggemäße Verfahren gebrauchte kristalline Katalysatoren auf der

Le A 21 152

Basis von Siliciumdioxid und/oder Silikaten eingesetzt, die Strukturmerkmale der Zeolithe der Pentasil-Familie aufweisen.

Ganz besonders bevorzugt werden in das erfindungsgemäße Verfahren gebrauchte kristalline Katalysatoren auf der Basis von Silicalit-I, Silicalit-II, Zeolith ZSM-5, Zeolith ZSM-11 und/oder Zeolith ZSM-8 eingesetzt.

Von den vorgenannten Katalysatortypen sind für das erfindungsgemäße Verfahren insbesondere solche geeignet, die für die Umwandlung von Methanol und/oder Dimethylether in Kohlenwasserstoffe eingesetzt worden sind. Es können aber auch in anderen Reaktionen gebrauchte Katalysatoren eingesetzt werden, beispielsweise diejenigen, die bei der Alkylierung, Cyclisierung, Disproportionierung, Isomerisierung, Kondensation, Oligomerisierung, Adsorption, Trennung von Alkanen, Alkenen, Alkinen, Aromaten und/oder mit Sauerstoff, Stickstoff oder Halogenen funktionalisierten Kohlenwasserstoffen verwendet wurden.

Zum Einsatz in das erfindungsgemäße Verfahren geeignete Katalysatoren können beispielsweise Siliciumdioxid oder dessen hydratisierte Form, z.B. sogenannte Kieselsäure, als aktiven Katalysatorbestandteil enthalten. Es ist für das erfindungsgemäße Verfahren unwesentlich, in welcher kristallographischen Modifikation und/oder Partikelgröße das Siliciumdioxid vorliegt. Das Siliciumdioxid kann eine amorphe oder kristalline Struktur auf-

Le A 21 152

weisen. Geeignet sind beispielsweise hochdisperse Kieselsäuren, z.B. pyrogene, gefällte oder aus der Verbrennung von Siliciummonoxid entstammende Kieselsäure, gemahlene Kieselsäure, z.B. gemahlener Quarz oder gemahlenes Kieselglas, Kieselgur und/oder kristalline Kieselsäuren, die ein dreidimensionales Kristallgitter mit Molekularsiebstruktur aufweisen, z.B. dealuminisierter Mordenit, dealuminisierter Erionit, Silica X, dealuminisierter Zeolith Y, Silicalit-I oder Silicalit-II.

Das erfindungsgemäße Verfahren kann praktisch bei allen gebrauchten Katalysatoren angewendet werden, deren katalytisch aktiver Bestandteil aus Siliciumdioxid besteht.

Bevorzugt sind diejenigen Katalysatoren, in denen das Siliciumdioxid eine kristalline Struktur aufweist. Besonders bevorzugt sind hiervon kristalline Kieselsäuren mit Molekularsiebstruktur. In ganz besonderer Weise eignen sich für das erfindungsgemäße Verfahren diejenigen kristallinen Kieselsäuren, deren Kristallstruktur Merkmale der Pentasil-Familie aufweist bzw. eine Verwandtschaft mit dieser erkennen läßt. Beispiele hierfür sind Silicalit-I und Silicalit-II.

Werden die aktiven Katalysatorbestandteile von Metall- und/oder Nichtmetallsilikaten gebildet, so können sich diese auch aus Mischungen von Siliciumdioxid mit Metall-

Le A 21 152

und/oder Nichtmetalloxiden zusammensetzen. Als Metall- und/oder Nichtmetalloxide, die mit Siliciumdioxid vermischt und/oder chemisch als Silikat gebunden vorliegen können, kommen für das erfindungsgemäße Verfahren diejenigen in Frage, die aus den Elementen der 1. bis 4. Hauptgruppe des Periodensystems, Elementen der 3. bis 6. Nebengruppe des Periodensystems und/oder Phosphor, Arsen, Antimon und/oder Zink gebildet werden.

Neben den vorstehend beschriebenen Kieselsäuren sind für das erfindungsgemäße Verfahren besonders Metall- und/oder Nichtmetallsilikate geeignet.

Bei dem metallischen und/oder nichtmetallischen Anteil kann es sich z.B. um folgende an Sauerstoff gebundene und/oder in Ionenform vorliegende Elemente handeln: Wasserstoff, Lithium, Natrium, Kalium, Rubidium, Cäsium, Beryllium, Magnesium, Calcium, Strontium, Barium, Scandium, Yttrium, Lanthan, Seltenerdelemente, Titan, Zirkonium, Hafnium, Vanadium, Niob, Tantal, Chrom, Molybdän, Wolfram, Bor, Aluminium, Gallium, Indium, Zink, Germanium, Zinn, Blei, Phosphor, Arsen und Antimon.

Bevorzugt wird das erfindungsgemäße Verfahren auf gebrauchte Katalysatoren aus Silikaten von Metallen, besonders des Aluminiums, Berylliums, Magnesiums und/oder Chroms sowie auf Silikate des Bors angewendet. Diese Silikate können noch weitere Metall- und/oder Nichtmetallverbindungen, beispielsweise Oxide oder Ionen der vorstehend genannten Elemente enthalten.

Le A 21 152

Es ist vorteilhaft, wenn die erfindungsgemäß zu regenerierenden Silikate eine kristalline Struktur aufweisen. Bevorzugt sind Silikate, deren Kristallgitter überwiegend aus $SiO_2$-Einheiten aufgebaut ist und die eine Zeolith- oder Molekularsiebstruktur aufweisen.

Besonders bevorzugt sind für die erfindungsgemäße Regenerierung Aluminium-, Bor-, Beryllium-, Chrom- und Zinksilikat-Zeolithe, die zur Ladungskompensation zusätzlich Alkalimetall-, Erdalkalimetall-, Wasserstoff- und/oder Seltenerdemetallionen enthalten.

Ganz besonders bevorzugt für die erfindungsgemäße Regenerierung sind diejenigen Silikate, die Strukturmerkmale der Zeolithe der Pentasil-Familie oder strukturelle Analogien zu Mitgliedern dieser Familie aufweisen.

Hierzu gehören beispielsweise: Zeolith Zeta-1, Zeolith ZSM-5, Zeolith ZSM-11, Zeolith ZSM-8, Silicalit-I und Silicalit II. Weitere Zeolithe und Kieselsäuren, die zur Pentasil-Familie gehören bzw. Analogien zu dieser aufweisen, sind beispielsweise Zeolith AMS-1B, Zeolith HCS, Zeolith ZSM-12, Zeolith Zeta-3.

Neben diesen definierten Zeolithen sind noch weitere Zeolith-Typen bzw. zeolithähnliche Kieselsäuren bekannt, deren Röntgenbeugungsdiagramme, zumindest hinsichtlich der Linien mit mittlerer, hoher und

Le A 21 152

- 10 -

höchster Intensität, mit denen der Pentasil-Familie übereinstimmen und somit dieser zuzuordnen sind. Auch Katalysatoren auf Basis dieser Verbindungen sind für das erfindungsgemäße Verfahren bevorzugt geeignet.

Das erfindungsgemäße Verfahren kann unabhängig von der geometrischen Form der zu regenerierenden Katalaysatoren angewendet werden. Es ist beispielsweise für Festbett-, Fließbett- und Wirbelschichtkatalysatoren geeignet. Im allgemeinen wird die erfindungsgemäße Regeneration in dem Gefäß vorgenommen, in dem auch die katalytische Umsetzung durchgeführt wird, wobei sich der zu regenerierende Katalysator im gleichen Zustand, d.h. im Festbett, im Fließbett oder in der Wirbelschicht, befindet, in dem die katalytische Umsetzung stattfindet. Es ist jedoch in gleicher Weise möglich, die Katalysatoren in einem separaten Behälter erfindungsgemäß zu regenerieren, wobei die Katalysatoren auch in anderen Zuständen vorliegen können, als während der katalytischen Umsetzung.

Bevorzugt wird die erfindungsgemäße Regenerierung auf Katalysatoren angewendet, die in Röhren- oder Schachtreaktoren fest angeordnet sind und die hierfür geeignete geometrische Abmessungen aufweisen, beispielsweise Teilchengrößen im Bereich von 1 bis 10 mm.

Das erfindungsgemäße Verfahren zur Regenerierung der mit Koks und/oder Koksvorläufern belegten Katalysa-

Le A 21 152

toren wird bei Temperaturen im Bereich 300 bis 450°C durchgeführt. Bevorzugt ist eine Temperatur im Bereich von 300 bis 420°C, besonders bevorzugt eine Temperatur im Bereich von 350 bis 400°C. In jedem Fall kann die erfindungsgemäße Regenerierung mit molekularen Sauerstoff und Wasserdampf enthaltenden Gasen bei niedrigeren Temperaturen vorgenommen werden als die übliche Regenerierung mit Sauerstoff enthaltenden Gasen.

Das erfindungsgemäße Verfahren kann unter den verschiedensten Drucken durchgeführt werden. Beispielsweise können Drucke von 1 bis 100 bar absolut zur Anwendung kommen. Aus verfahrenstechnischen Gründen ist es im allgemeinen vorteilhaft, den bei der vorhergehenden katalytischen Reaktion angewendeten Druck auch während der erfindungsgemäßen Regeneration beizubehalten. Das erfindungsgemäße Verfahren kann beispielsweise auch bei Normaldruck, d.h. 1 bar absolut, oder bei nur relativ niedrigen Drucken, beispielsweise bei Drucken im Bereich von 1 bis 20 bar absolut, durchgeführt werden.

Es ist ein wesentliches Merkmal des erfindungsgemäßen Verfahrens, daß ein Gasgemisch eingeleitet wird, das molekularen Sauerstoff und Wasserdampf enthält. Neben Sauerstoff und Wasserdampf können weitere, vorzugsweise inerte Gase zugegen sein. Beispielsweise kann die Regeneration mit Wasserdampf/Sauerstoff-, Wasserdampf/Sauerstoff/Stickstoff- oder Wasserdampf/Sauer-

Le A 21 152

stoff/Rauchgas-Gemischen erfolgen. Vorzugsweise werden Gemische aus Wasserdampf, Stickstoff und Luft oder Wasserdampf und Luft angewendet.

Die Menge des anzuwendenden Wasserdampfes kann in weiten Grenzen variiert werden, wobei nach oben eine Begrenzung durch die Wirtschaftlichkeit und nach unten durch die Stöchiometrie der Wassergasreaktion gegeben ist. Bevorzugt beträgt der Wasserdampf-Partialdruck 0,1 bis 50 %, besonders bevorzugt 1 bis 10 %, bezogen auf den Gesamtdruck des Regeneriergases.

In ähnlicher Weise kann die Konzentration des molekularen Sauerstoffes in weiten Grenzen variiert werden. Die Konzentration des molekularen Sauerstoffes im Regeneriergas kann sich beispielsweise in den technisch üblicherweise bei Katalysatorregenerierungen eingehaltenen Bereichen bewegen. Bevorzugt beträgt der Sauerstoff-Partialdruck 0,1 bis 30 %, besonders bevorzugt 0,5 bis 10 %, bezogen auf den Gesamtdruck des Regeneriergases.

Die Dauer einer erfindungsgemäßen Regeneration richtet sich im allgemeinen nach der Menge des auf dem Katalysator befindlichen Kokses und/oder der Koksvorläufer. Es kann günstig sein, Katalysatoren bereits dann erfindungsgemäß zu regenerieren, wenn sie noch eine hohe Aktivität besitzen, also nur mit relativ geringen Mengen an Koks und/oder Koksvorläufern beladen sind.

Le A 21 152

Der Zeitbedarf für eine erfindungsgemäße Regenerierung beträgt im allgemeinen unter 50 Stunden. Häufig sind Zeiten zwischen 5 und 10 Stunden ausreichend.

Der Fortgang der Regenerierung kann beispielsweise verfolgt werden, indem man kontinuierlich oder in regelmäßigen Intervallen im Abgas aus der Regenerierung den Gehalt an Kohlenmonoxid und/oder Kohlendioxid mißt, was nach bekannten Analysenmethoden vorgenommen werden kann. Die Regenerierung wird im allgemeinen dann beendet, wenn die Konzentration von Kohlenmonoxid und/oder Kohlendioxid im Abgas gegen Null geht. Das erfindungsgemäße Verfahren kann auch dann beendet werden, wenn sich die Konzentration von Kohlenmonoxid und/oder Kohlendioxid nach vorhergegangener kontinuierlicher Abnahme auf einen sehr geringen Wert einpendelt und dieser über mehrere Stunden praktisch unverändert bleibt.

Diese Methode ist bei Verwendung von Rauchgas/Sauerstoff/Wasserdampf-Gemischen als Regeneriergas selbstverständlich nicht geeignet, da Rauchgase Kohlendioxid und/oder Kohlenmonoxid enthalten. In solchen Fällen kann der Fortgang der Regenerierung beispielsweise durch Verfolgung des Sauerstoffumsatzes bestimmt werden.

In einer beispielhaften technischen Ausführungsform des erfindungsgemäßen Verfahrens wird wie folgt verfahren:

An einem Katalysator vom Zeolith-Typ, mit einem rechnerischen Siliciumdioxidanteil von über 50 Gew.-%, werden beispielsweise niedere aliphatische Alkohole, bei Temperaturen im Bereich von 300 bis 400°C, in Kohlenwasserstoffe, beispielsweise Olefine und/oder Aromaten, umgewandelt. Technisch kann diese Reaktion mit gutem Erfolg an fest angeordneten Katalysatoren, beispielsweise in einem Röhrenreaktor, durchgeführt werden. Üblicherweise wird dabei bei Drucken unterhalb 100 bar, häufig im Bereich von 10 bis 50 bar, gearbeitet. Wenn nach längeren Laufzeiten, beispielsweise nach mehreren 100 Stunden, festgestellt wird, daß der Umsatz des Einsatzmaterials absinkt, wird die erfindungsgemäße Regenerierung durchgeführt, indem man in den Reaktionsraum anstatt Einsatzmaterial eine Mischung aus Wasserdampf, Luft und Stickstoff einleitet, ohne dabei die Temperatur wesentlich zu ändern. Keinesfalls wird die Temperatur auf Werte über 450°C erhöht. Ebenso ist es im allgemeinen zweckmäßig, den im Verlauf der vorangegegangenen chemischen Reaktion angewendeten Druck auch im Verlauf des Regenerierens beizubehalten.

Die stündlich über den Katalysator geleitete Menge an gesamtem Regeneriergas ist nicht kritisch und kann sich in den technisch üblicherweise bei Katalysatorregenerationen eingehaltenen Größenordnungen bewegen. Es ist jedoch für das erfindungsgemäße Verfahren wesentlich, daß das Regeneriergas molekularen Sauerstoff und Wasserdampf enthält. Bevorzugt werden Sauerstoffpartialdrucke von 0,1 bis 30 % und Wasserdampfpartialdrucke von 0,1 bis 50 %, jeweils bezogen auf den Gesamtdruck des Regeneriergases, angewendet. Zur Regenerierung können in besonderen Fällen auch Gasgemische verwendet werden, die einen höheren Anteil an Wasserdampf aufweisen und denen nur wenig Luft oder molekularer Sauerstoff zugesetzt worden ist. Beispielsweise kann der Sauerstoffpartialdruck auch bis zu 0,1 % und der Wasserdampfpartialdruck über 99,5 %, jeweils bezogen auf den Gesamtdruck des Regeneriergases, betragen.

Das erfindungsgemäße Verfahren kann auch mit gutem Erfolg durchgeführt werden, wenn relativ niedrige Wasserdampfpartialdrücke im Regeneriergas eingehalten werden, beispielsweise solche im Bereich von 1 bis 10 %, bezogen auf den Gesamtdruck des Regeneriergases.

Da im allgemeinen bei Regenerationsprozessen mit sauerstoffhaltigen Gasen eine starke Wärmeentwicklung auftritt, ist es vorteilhaft, zu Beginn der erfindungsgemäßen Regeneration nur einen niedrigen Sauerstoffpartialdruck, beispielsweise im Bereich von 0,1 bis 2 %, bezogen auf den Gesamtdruck des Regeneriergases, anzuwenden, beispielsweise durch Zugabe von Luft zu einer Mischung aus Wasserdampf und Stickstoff. Wenn festgestellt wird, daß die pro Zeiteinheit gebildete Menge an Kohlenmonoxid und/oder Kohlendioxid im Abgas nach einiger Zeit konstante Werte annimmt oder sogar abnimmt, kann der Sauerstoffanteil im Regeneriergas gesteigert werden, beispielsweise auf Werte von 10 bis 30 oder 15 bis 25 %, bezogen auf den Gesamtdruck des Regeneriergases. Diese Steigerung kann zu Lasten

des Wasserdampfanteils gehen, wobei jedoch stets der
Mindestgehalt an Wasserdampf 0,1 % des Gesamtdruckes
betragen sollte.

Wird festgestellt, daß trotz Erhöhung des Sauerstoffanteils der Gehalt an Kohlenmonoxid und/oder Kohlendioxid im Abgas stetig abnimmt und sich bei sehr geringen Werten, beispielsweise nahe Null einpendelt, kann
der Regenerationsvorgang beendet werden. Es ist günstig, wenn danach ein zusätzlicher Spülvorgang, beispielsweise mit Stickstoff und/oder Wasserdampf vorgenommen wird, um alle Sauerstoffreste aus der Reaktionszone und dem Reaktor zu entfernen.

Der Katalysator ist auf diese Weise von kohlenstoffhaltigen, desaktivierenden Belägen im wesentlichen
befreit und kann wieder für katalytische Umsetzungen
verwendet werden.

Das erfindungsgemäße Verfahren hat den Vorteil, daß
es bei relativ tiefen Temperaturen, insbesondere bei
den Temperaturen der katalytischen Umsetzungen, durchgeführt werden kann. So entfällt die Zeit für das Aufheizen und Abkühlen der Katalysatoren, die gemäß den
Regenerationsverfahren nach dem Stand der Technik
notwendig ist. Dadurch steht der Katalysator wieder
schneller für die gewünschte katalytische Umsetzung
zur Verfügung. Außerdem müssen die Reaktionsgefäße
nicht aus Sonderwerkstoffen gefertigt sein. Die
Regenerationstemperaturen liegen so niedrig, daß
während der Regeneration keine Gefahr der Verzunderung der Werkstoffe besteht. Es ist ausgesprochen

Le A 21 152

überraschend, daß es erfindungsgemäß gelingt, Regenerierungen in Gegenwart von Wasserdampf vorzunehmen, ohne daß dabei Schädigungen der Katalysatoren beobachtet werden.

Weiterhin ist überraschend, daß erfindungsgemäß eine einfache und unter milden Bedingungen verlaufende Regenerierung möglich ist, ohne daß die Katalysatoren mit speziellen, die Regenerierung fördernden Zusätzen versehen sein müssen.

Das erfindungsgemäße Verfahren wird durch die nachfolgenden Beispiele erläutert, ohne es in irgendeiner Weise einzuschränken.

Le A 21 152

- 18 -

Beispiele

Beispiel 1

Es wurde eine Katalysatorgrundmasse, bestehend aus einem kristallinen, Aluminosilikat-Zeolith entsprechend Beispiel 14 der DE-OS 2 442 240 hergestellt, die folgende Zusammensetzung aufwies:
0,1 Gew.-% $Na_2O$; 2,20 Gew.-% $Al_2O_3$; 95,0 Gew.-% $SiO_2$.

Diese Katalysatorgrundmasse wurde nach üblichen Methoden (Binden, Extrudieren, Trocknen, Calcinieren, Ionenaustausch) zu einem Festbettkatalysator verarbeitet. Die Katalysator-Grundmasse wies in der calcinierten und bindemittelfreien Form einen Siliciumdioxidanteil von 95,0 Gew.-% auf.

350 ml des Katalysators wurden in einen Rohrreaktor gefüllt und bei einem Druck von 10 bar und bei einer Temperatur von durchschnittlich 370°C mit einer Methanol/Wasser-Mischung, sowie Stickstoff beaufschlagt.

Die Methanol/Wasser-Mischung entsprach in ihrer Zusammensetzung einem technischen, wasserhaltigen Rohmethanol mit einem Methanolgehalt von 84 Gew.-%. Die Kontaktbelastung betrug 2 kg Methanol/Wasser-Gemisch pro 1 kg Katalysator und Stunde. Das Verdünnungsverhältnis (Methanol plus Wasser zu Stickstoff) betrug 25:75 Vol.-Teile unter Reaktionsbedingungen.

Le A 21 152

Unter diesen Versuchsbedingungen wurde der folgende Reaktionsverlauf beobachtet:

| Versuchsdauer (Stunden) | 24 | 72 | 96 | 120 |
|---|---|---|---|---|
| Methanolumsatz (%) | 99,9 | 95,4 | 72,1 | 55,8 |
| Dimethyletheranteil im Kohlenwasserstoffprodukt (%) | 0,0 | 0,3 | 56,1 | 83,3 |

Hieraus ersieht man, daß dieser nach dem Stand der Technik hergestellte Katalysator bereits nach einer Versuchsdauer von 72 Stunden merkliche Aktivitätseinbußen zeigt und nach einer Versuchsdauer von 120 Stunden sehr stark desaktiviert worden ist.

Zur Regenerierung des Katalysators wurde die Zufuhr des Einsatzmaterials unterbrochen und der Katalysator während einer Stunde mit 400 Nl Stickstoff gespült. Im Anschluß an diesen Spülvorgang wurde bei unveränderter Temperatur (370°C) und unverändertem Druck (10 bar) eine Mischung aus Luft, Wasserdampf und Stickstoff über den Katalysator geleitet. Die Einzelheiten dieser Regenerierung sind der Tabelle 1 zu entnehmen:

Le A 21 152

Tabelle 1

| Rege-<br>nerier-<br>phase | Dauer<br>der<br>Ein-<br>stellung<br>(h) | Stick-<br>stoff-<br>menge<br><br>(Nl/h) | Luft-<br>menge<br><br><br>(Nl/h) | Wasser-<br>menge [a]<br><br><br>(ml/h) | Abgaszusammensetzung (Vol.-%) | | | | | |
| | | | | | $CO$ | | | $CO_2$ | | |
| | | | | | Anfangs-<br>wert | Maximal-<br>wert | End-<br>wert | Anfangs-<br>wert | Maximal-<br>wert | End-<br>wert |
|---|---|---|---|---|---|---|---|---|---|---|
| I | 8 | 456 | 24 | 120 | 0 | 1,4 | 0,7 | 0 | 0,6 | 0,49 |
| II | 8 | 432 | 48 | 120 | 1,0 | 1,0 | 0,7 | 0,6 | 0,65 | 0,30 |
| III | 4 | 360 | 120 | 120 | 0,6 | 0,8 | 0,7 | 0,3 | 0,35 | 0,30 |
| IV | 8 | 240 | 240 | 120 | 0,7 | 0,8 | 0,01 | 0,27 | 0,35 | 0,05 |

[a] Die Wassermenge wurde bei 370°C in einem Elektrovorheizer verdampft
und gasförmig dem Katalysator zugeführt.

Nach Beendigung dieser Regenerierung wurde der Katalysator 1 Stunde mit 400 Nl Stickstoff gespült und dann erneut unter den ursprünglichen Reaktionsbedingungen mit der Methanol/Wasser-Mischung beaufschlagt.

Die dabei erhaltenen Ergebnisse waren wie folgt:

| Versuchsdauer (Stunden) | 24 | 64 | 88 | 136 |
|---|---|---|---|---|
| Methanolumsatz (%) | 99,9 | 97,0 | 73,1 | 52,2 |
| Dimethyletheranteil im Kohlenwasserstoffprodukt (%) | 0,0 | 0,5 | 40,9 | 91,4 |

Diese Ergebnisse zeigen, daß der erfindungsgemäß regenerierte Katalysator hinsichtlich seiner Aktivität mit dem frisch hergestellten Katalysator vergleichbar ist.

Beispiel 2

1000 g eines in Form von Kugeln mit einem Durchmesser von 5 mm vorliegenden amorphen Aluminiumsilikats, das nach Spezifikation einen $Al_2O_3$-Gehalt von unter 5 Gew.-% aufweist und unter der Bezeichnung KA von der Südchemie AG, München, Deutschland, bezogen werden kann, wurden 6 Stunden bei 900°C geglüht und anschließend durch Evakuieren entgast.

Das so vorbehandelte Material wurde mit einer Mischung, bestehend aus 80 g Natriumhydroxid, 81 g Zinkoxid,

Le A 21 152

266 g Tetrapropylammoniumbromid und 1400 g Wasser, übergossen und während eines Zeitraumes von 20 Tagen einer Temperatur von 100°C ausgesetzt.

Anschließend wurde die Mutterlauge durch Abdekantieren entfernt und das Reaktionsprodukt, das noch die ursprüngliche Kugelform aufwies, bis zur neutralen Reaktion mit Wasser gewaschen.

Die Trocknung dieses Produkts bei 120°C und 2-stündiges Calcinieren bei 550°C führte zu einem zinkhaltigen und kristallinen Aluminiumsilikat mit der Zusammensetzung (als Oxidgemisch berechnet):

$SiO_2$     92,20 Gew.-%
$Al_2O_3$    1,51 Gew.-%
$Na_2O$    1,22 Gew.-%
ZnO     5,07 Gew.-%

Zur Entfernung der austauschbaren Natriumionen wurde das Produkt in einer beheizten Chromatographie-Säule bei einer Temperatur von 100°C kontinuierlich mit insgesamt 10 l einer 2 n-Ammoniumchloridlösung behandelt, danach getrocknet und bei einer Temperatur von 500°C bis zum Ende der Entwicklung flüchtiger Anteile calciniert.

Es resultierte die Wasserstoff-Form eines zinkhaltigen kristallinen Aluminiumsilikats.

314 ml des so hergestellten Katalysators wurden in einen Rohrreaktor gefüllt und bei einer Versuchs-

Le A 21 152

temperatur von 360°C, einem Druck von 10 bar und einer Kontaktbelastung von 444 g/l . h mit gasförmigem Methanol beaufschlagt. Der Reaktionsdruck wurde durch einen Stickstoffzusatz zum Einsatz-Methanol aufrechterhalten.

Die Versuchsergebnisse sind in Tabelle 2 dargestellt.

Le A 21 152

## Tabelle 2

| Reaktionszyklus Nr. | | 1 | Regeneration bei 500°C | | 2 | Regeneration bei 500°C | | 3 |
|---|---|---|---|---|---|---|---|---|
| | Reaktion bei 360°C | | | Reaktion bei 360°C | | | Reaktion bei 360°C | |
| Zyklusdauer h | 564 | | | 672 | | | 643 | |
| Methanolumsatz, Gew.% total | Anfang 99,0 | Ende 97,9 | analog zu c) | Anfang 99,9 | Ende 98,6 | analog zu c) | Anfang 99,9 | Ende 98,7 |
| Methanolumsatz zu Gew.% Kohlenwasserstoffen a) | 99,9 | 95,9 | | 98,7 | 95,5 | | 98,2 | 92,5 |
| Methanolumsatz zu Gew.% Dimethylether b) | 0,0 | 2,0 | | 1,2 | 3,1 | | 1,7 | 6,2 |

| | | 4 | | | 5 |
|---|---|---|---|---|---|
| Regeneration bei 360°C | Reaktion bei 360°C | | Regeneration bei 360°C | Reaktion bei 360°C | |
| | 821 | | | 720 | |
| mit Luft und $H_2O$ d) | Anfang 99,9 | Ende 98,2 | mit Luft und $H_2O$ d) | Anfang 99,9 | Ende 98,6 |
| | 98,2 | 94,0 | | 98,1 | 94,4 |
| | 1,7 | 3,4 | | 1,8 | 4,2 |

Erklärungen zu Tabelle 2

a)   entspricht der Gesamtausbeute an Kohlenwasser-
     stoffen plus Reaktionswasser

b)   entspricht der Ausbeute an Dimethylether plus
     Reaktionswasser

c)   Regeneration nach Ind. Eng. Chem. Process Des. Dev.,
     Vol. 17, No. 3, Seite 341 (1978)

d)   **Regenerierbedingungen: 2000 g $H_2O$/l Katalysator
     und Stunde (verdampft und auf 360°C vorgeheizt)
     zusätzlich Luftzugabe entsprechend einer Anfangs-
     konzentration von 1 Vol-% $O_2$, bezogen auf das den
     Katalysator durchströmende Dampf-Luft-Gemisch bis
     zum Abklingen der $CO_2$-Entwicklung, dann kontinuier-
     liche Steigerung des Sauerstoffgehaltes auf 10
     Vol.-% durch Erhöhung der Luftzugabe bis zum Ab-
     sinken des Sauerstoff-Umsatzes auf 0 %, Regenera-
     tionsdruck 10 bar.**

Die Regenerationen nach dem 1. und 2. Reaktionszyklus
erfolgten gemäß dem Stand der Technik, die Regenerationen nach dem 3. und 4. Reaktionszyklus gemäß der
vorliegenden Erfindung.

Le A 21 152

Die Tabelle 2 zeigt, daß die Aktivität des Katalysators nach den erfindungsgemäßen Regenerierungen (nach dem Reaktionszyklus 3 und 4) vergleichbar ist mit der Aktivität des frischen oder gemäß dem Stand der Technik regenerierten Katalysators.

Die Tabelle 2 zeigt weiterhin, daß der Katalysator hinsichtlich seiner Standfestigkeit, gekennzeichnet durch die Dauer eines Reaktionszyklus, noch bessere Ergebnisse zeigt, wenn er erfindungsgemäß bei 360°C mit einem Wasserdampf/Luft-Gemisch regeneriert worden ist. So sind die Zyklen 4 und 5 mit 821 bzw. 720 Stunden Dauer wesentlich länger als die vorangegangenen.

Beispiel 3 (Vergleichsbeispiel)

Der in Beispiel 1 beschriebene Katalysator wurde unter den Versuchsbedingungen wie in Beispiel 1 bis zum Abklingen der katalytischen Aktivität mit einer Methanol/Wasser-Mischung und Stickstoff beaufschlagt.

Im Anschluß an die chemische Reaktion wurde bei unveränderter Temperatur, d.h. 370°C, ein Regenerationsversuch bei 10 bar Gesamtdruck mit 1600 Nl Regeneriergas pro 1 Katalysator und Stunde vorgenommen. Das Regenerationsmedium bestand hierbei aus einer Luft-Stickstoff-Mischung, mit einem $O_2$-Gehalt zwischen 1 und 10 Vol-%. Es wurde kein Wasserdampf zugesetzt.

Le A 21 152

Die Einzelheiten des Regenerationsversuches sind in
Tabelle 3 dargestellt.

Tabelle 3

| Zeit | Abgaszusammensetzung | | | Gaszusammensetzung im Reaktoreingang (%) | |
|---|---|---|---|---|---|
| (h) | Vol.% CO | Vol.% $CO_2$ | Vol.% $O_2$ | Vol.% $O_2$ | Vol.% $N_2$ |
| 4 | O | O,2 | O,8 | ca. 1 | ca. 99 |
| 4 | O | O,15 | O,9 | | |
| 5 | O | O,2 | 2,0 | ca. 2 | ca. 98 |
| 3 | O | O,15 | 2,0 | | |
| 4 | O | O,2 | 5,0 | ca. 5 | ca. 95 |
| 3 | O | O,25 | 10,0-10,5 | ca. 10 | ca. 90 |
| 5 | O | O,20 | 10,5-10,3 | | |
| totale Regenerationsdauer 28 h | | | | | |

Aus Tabelle 3 ist zu erkennen, daß bei einer Temperatur
von 370°C die Katalysatorregeneration sehr langsam und
nur unvollständig verläuft, wenn in Abwesenheit von Wasserdampf gearbeitet wird.

Le A 21 152

Beispiel 4

(erfindungsgemäße Fortsetzung von Beispiel 3)

Anschließend an den Regenerationsversuch entsprechend Beispiel 3 wurde die Regeneration erfindungsgemäß mit einer Mischung aus Stickstoff, Luft und Wasserdampf fortgesetzt. Dabei wurde so vorgegangen, daß der Sauerstoffgehalt im Regenerationsgas auf Werte von ca. 1 Vol.% abgesenkt und dann wieder, dem Fortgang der Regeneration entsprechend, auf ca. 10 Vol.% gesteigert wurde. Die Regenerationsbedingungen entsprachen den zuvor angewendeten, zusätzlich wurden jedoch noch 100 ml Wasser pro Stunde bei 370°C in verdampfter Form während der gesamten Regeneration über den Katalysator geleitet.

Die Einzelheiten dieser Regeneration sind in Tabelle 4 dargestellt:

Le A 21 152

Tabelle 4

| Zeit | Abgaszusammensetzung | | | Gaszusammensetzung im Reaktoreingang **) | |
|------|------------|------------|-----------|-----------|-----------|
| (h) | Vol.% CO | Vol.% $CO_2$ | Vol.% $O_2$ | Vol.% $O_2$ | Vol.% $N_2$ |
| 1 | 0 | 0 *) | 1,1-1,0 | ca. 1 | ca. 99 |
| 1 | 0 -0,4 | 0,35 | 1,0-0,6 | | |
| 1 | 0,4-0,15 | 0,35-0,15 | 0,6-1,0 | | |
| 3 | 0,15-0,05 | 0,15-0,05 | 1,0-1,0 | | |
| 8 | 0,1 | 0,05 | 2,2-2,3 | ca. 2 | ca. 98 |
| 4 | 0,1 | 0,05 | 5,2 | ca. 5 | ca. 95 |
| 4 totale Regenerationsdauer: 22 h | 0,1 | 0,05 | 9,8-9,7 | ca. 10 | ca. 90 |

*) Das Abfallen des $CO_2$-Abgaswertes von 0,2 Vol.% (s. Tabelle 3) auf Null Vol.% (s. Tabelle 4) ist dadurch zu erklären, daß das im Ausgang der Apparatur kondensierende Wasser sich bei dem angewendeten Druck von 10 bar mit $CO_2$ sättigt.

**) Ohne Berücksichtigung des zugeführten Wasserdampfes

Aus Tabelle 4 ist ersichtlich, daß bei erfindungsgemäßem Zusatz von Wasserdampf zum sauerstoffhaltigen Regenerationsmedium die Regeneration schon bei ge-

Le A 21 152

ringen Sauerstoffkonzentrationen, d.h. ca. 1 Vol.%, mit befriedigender Geschwindigkeit abläuft. Weiterhin wurden erhebliche Mengen CO gebildet. Der Regenerationsvorgang war praktisch schon nach 6 Stunden beendet; nach dieser Zeit blieben die Abgaswerte trotz des erhöhten Sauerstoffangebotes konstant.

Die Regeneration mit der Sauerstoff/Stickstoff/Wasserdampf-Mischung wurde nach insgesamt 22 Stunden beendet. Es konnte festgestellt werden, daß danach der Katalysator wieder seine ursprüngliche Aktivität aufwies.

Patentansprüche

1. Verfahren zur Regeneration von mit Koks und/oder Koksvorläufern belegten Katalysatoren mit Sauerstoff enthaltenden Gasmischungen, dadurch gekennzeichnet, daß man Katalysatoren, die mehr als 50 Gew.-% an Sauerstoff gebundenes Silicium (berechnet als $SiO_2$ und ohne Berücksichtigung von Belägen, Bindemitteln und Inertmaterialien), sowie gegebenenfalls, an Sauerstoff gebunden oder in Ionenform vorliegend, eines oder mehrere der Elemente der 1. bis 4. Hauptgruppe des Periodensystems, der Elemente der 3. bis 6. Nebengruppe des Periodensystems und/oder der Elemente Phosphor, Arsen, Antimon und/oder Zink enthalten, bei Temperaturen im Bereich von 300 bis 450°C mit einem Gasgemisch regeneriert, das molekularen Sauerstoff und Wasserdampf enthält.

2. Verfahren nach Anspruch 1, dadurch gekennzeichnet, daß Katalysatoren eingesetzt werden, die rechnerisch zwischen 70 und 100 Gew.-% Siliciumdioxid enthalten.

3. Verfahren nach Ansprüchen 1 und 2, dadurch gekennzeichnet, daß Katalysatoren eingesetzt werden, die Siliciumdioxid, Kieselsäure, amorphe Metall- und/oder Nichtmetallsilikate und/oder kristalline Metall- und/oder Nichtmetallsilikate enthalten,

Le A 21 152

wobei der metallische und/oder nichtmetallische Bestandteil aus einem oder mehreren Elementen der 1. bis 4. Hauptgruppe des Periodensystems, der 3. bis 6. Nebengruppe des Periodensystems und/oder Phosphor, Arsen, Antimon und/oder Zink gebildet wird.

4. Verfahren nach Ansprüchen 1 bis 3, dadurch gekennzeichnet, daß Katalysatoren eingesetzt werden, die kristallines Siliciumdioxid und/oder kristalline, Metall- und/oder Nichtmetallsilikate mit Zeolithstruktur enthalten, wobei die Metall- und/oder Nichtmetallsilikate gegebenenfalls zusätzlich Wasserstoffionen, Alkalimetallionen, Erdalkalimetallionen, Zinkionen und/oder Seltenerdmetallionen enthalten.

5. Verfahren nach Anspruch 4, dadurch gekennzeichnet, daß kristalline Katalysatoren auf der Basis von Siliciumdioxid und/oder Silikaten eingesetzt werden, die Strukturmerkmale der Zeolithe der Pentasil-Familie aufweisen.

6. Verfahren nach Ansprüchen 1 bis 5, dadurch gekennzeichnet, daß Katalysatoren eingesetzt werden, die für die Umwandlung von Methanol und/oder Dimethylether in Kohlenwasserstoffe eingesetzt worden sind.

7. Verfahren nach Ansprüchen 1 bis 6, dadurch gekennzeichnet, daß ein Gasgemisch eingeleitet wird, das ein Wasserdampf/Sauerstoff-, Wasserdampf/Sauer-

Le A 21 152

BAD ORIGINAL

stoff/Stickstoff- oder Wasserdampf/Sauerstoff/Rauchgas-Gemisch ist.

8. Verfahren nach Ansprüchen 1 bis 7, dadurch gekennzeichnet, daß der Wasserdampfpartialdruck 0,1 bis 50 Gew.-%, bezogen auf den Gesamtdruck des Regeneriergases, beträgt.

9. Verfahren nach Ansprüchen 1 bis 8, dadurch gekennzeichnet, daß der Sauerstoffpartialdruck 0,1 bis 30 Gew.-%, bezogen auf den Gesamtdruck des Regeneriergases, beträgt.

10. Verfahren nach Ansprüchen 1 bis 9, dadurch gekennzeichnet, daß man die Regeneration beendet, wenn die Konzentration von Kohlenmonoxid und/oder Kohlendioxid im Abgas aus der Regeneration gegen Null geht.

Le A 21 152